# EUROPEAN PATENT APPLICATION

(11) **EP 4 660 834 A1**
(43) Date of publication of application: **10.12.2025**
(21) Application number: 24180524.1
(22) Date of filing: 06.06.2024
(51) Int. Cl.: G06F 16/28

(54) **METHOD, IN PARTICULAR COMPUTER IMPLEMENTED METHOD, FOR GENERATING AN INFORMATION MODEL FOR THE COLLECTION AND OUTPUT, IN PARTICULAR DISPLAY, OF ASSET DATA, COMPUTER PROGRAM AND COMPUTER-READABLE MEDIUM**

(71) Applicant: Siemens Aktiengesellschaft, 80333 München (DE)
(72) Inventor: Cardoso do Nascimento, Rafael, Laguna Hills, 92656 (US); Doyle, Aidan, Aliso Viejo, 92656 (US); Milam, Christopher, Lake Forest, 92630 (US); Ougarov, Andrei, Wilmington (US)
(74) Representative: Siemens Patent Attorneys

(57) **Abstract**

The invention relates to a method for generating an information model for the collection and output of asset data originating from multiple data sources, the method comprising:
- creating an assets model (1) being a class system with several classes (2, 3, 4) and relations between classes (2, 3, 4),
- automatically creating assets collections (5, 6) from the assets model (1), and
- automatically creating objects (9) for the assets, wherein the assets are on one hand represented as rows (7) in the assets collections (5, 6) and on the other hand as a hierarchy of matching asset objects (9).

Furthermore, the invention relates to a computer program and a computer-readable medium

## Description

The invention relates to a method, in particular computer implemented method, for generating an information model for the collection and output, in particular display, of asset data. Furthermore, the invention relates to a computer program and a computer-readable medium.

A number of attempts have been made to collect data from various data sources (also called back-end data sources) in the industrial field and to present that data to users. Various back-end data sources, for example regarding an industrial system or plant, as an industrial manufacturing system or plant, comprising a number of assets, like pumps, compressors, heat exchangers and/or the like, may contain different types and formats of data, including relational data, point data, time-series data, and object data.

Relational data comprise data from multiple tables of multiple fields. The tables may be related to each other, in particular through indexes. Point data is single-type data typically associated with manufacturing systems. For example, a data system may continuously collect a motor's operating speed and operating temperature as point data. Unlike relational data, point data typically are not comprised of multiple tables. Time-series data are data that store the change in data value over time. Object data are data represented by objects. The concepts of object, object-oriented design, object-oriented programming and object-oriented databases are known to those skilled in the art.

US 6 700 590 B1 discloses a system and method for retrieving and presenting data using class-based component and view model. The disclosed system retrieves data of various formats, including relational data, point data and time-series data, and connects such data to class-based components and component members. Using a class based, i.e., object-oriented model, it provides means for developers and users to define and modify reusable components, and means for developers and users to define and modify reusable views to present data in graphics including animation.

Industrial information models often represent physical, conceptual, or logical entities or measurement devices as objects in the model. These same entities or devices may also be accessible as raw data. According to the knowledge of the applicant, these objects and data are treated differently, stored redundantly, and are accessed in incompatible ways.

The applicant further knows that industrial information models typically will treat objects as first-class citizens and data is only there for operating on. If there is meta data that could represent aspects or attributes of these objects, these data are often separately maintained and do not have the full richness of object-oriented behavior. Conversely, objects do not lend themselves as easily to query-type language manipulation as do tabular (relational) data.

Another technique known to the applicant is to make these tabular data appear as objects in visualization applications but not being actual objects in the information model. These pseudo-objects lack fundamental characteristics like their real object counterparts: granular security, live data updates, etc.

It is an object of the present invention to provide an alternative method, in particular computer implemented method, for generating an information model for the collection and output, in particular display, of asset data, which, in particular avoids the aforementioned disadvantages and enables for an especially efficient and reliable collection and output of data.

This object is solved by a method, in particular computer implemented method, for generating an information model for the collection and output, in particular display, of asset data originating from multiple data sources, the asset data regarding and/or originating from assets, in particular assets of an industrial system or plant,
the method comprising:
- creating an assets model being a class system with several classes and relations between classes, preferably, wherein one class defines the assets model, main class, and/or several classes represent different types of assets, subclasses, and/or wherein the class system includes inheritance from and composition with other assets,
- automatically creating assets collections from the assets model, wherein the assets collections are embodied as tables and are configured to receive asset data from the data sources, wherein each row in an assets collection represents one asset and comprises and/or receives data for the respective asset, and wherein at least one, in particular exactly one, assets collection is automatically created for each class of the assets model, and
- automatically creating asset objects for the assets, wherein the assets are on one hand represented as rows in the assets collections and on the other hand as a hierarchy of matching asset objects.

The applicant realized that key users of industrial systems or plants, such as system/plant engineers, operators, maintenance managers, reliability engineers, and process engineers often approach their assets, depending on use case, in two modalities: tabular and object-oriented. As opposed to transforming data to objects and vice versa with the risk of inconsistency between the different modalities and extra expenditure of time/resources developing such transformations, the present invention suggest duality.

To obtain duality, a class system (assets model) is developed to represent the types of assets, preferably including inheritance and composition with other assets. The hierarchy of the asset model expediently is defined by the classes and their relations. In other words, asset modeling takes place, where asset hierarchy is defined by classes and their relations.

In preferred embodiment, an assets model is created which comprises one class defining the assets model, which may be called a main class or class "Asset" and/or several classes which represent different types of assets, subclasses. The main class or class "Asset" preferably is a built-in, immutable class and/or a class representing the root of the assets model hierarchy, to which all further classes of the assets model are subclasses. Preferably, the assets model comprises one or more direct subclasses to the preferably built-in main class, which regard different types of assets and possibly further subclasses being subordinate to the direct subclasses of the main class. For example, two, three, four, five or more direct subclasses of the main class "Asset" may exist, like a subclass for asset type "Pump", a subclass for asset type "Compressor", and possibly a subclass for asset type "Heat exchanger", a subclass for asset type "Turbine" and a subclass for asset type "Drive", wherein these five different kinds of assets are to be understood as purely exemplary. Each of these subclasses being a direct subclass of the main class "Asset" may comprise their own subclasses, preferably, wherein such subclasses of second or lower level(s) regard attributes or features of the respective type of asset of whose class they are subordinate. Coming back to the example of a subclass "Pump" being a direct subclass to the main class "Asset", there may be two subclasses being subordinate to subclass "Pump", for example a subclass "Dynamic" and a subclass "PositiveDisplacement".

From the asset model assets collections (tables) are automatically created according to the invention. These assets collections, which may also be called global assets collections, are expediently configured to receive asset data from the multiple data sources. In preferred embodiment, the metadata and data are prepared to provide references to other assets and tags.

A tag in this context preferably is a single measurement point that may or may not have a history of timestamped data values and associated data quality stored in an external data historian, database, or other back-end data source. Associated with a tag is a tag name that uniquely identifies the measurement point, a description, and possibly other information like value range, high and low limits, etc.

Also, objects for the assets are automatically created, such that assets from these data are represented as rows in the assets collections, being embodied as tables, and a hierarchy of matching objects at the same time. Preferably, the assets collections and data delivery are configured which allows dynamic and automatic creation of asset object and their linkage.

The columns of (each) assets collection preferably are defined by the assets model class's member attributes and rows are inserted based on data read from back-end data sources that match the asset type.

The asset objects are instantiated (preferably as defined by the corresponding class) and member data of each object preferably comes from the corresponding row in the assets collection of the same type.

An "object" preferably is to be understood as a fundamental unit of data encapsulation that combines both data (attributes) and behaviors (methods or functions) within a single entity. It serves as an instance of a class, which is a blueprint for creating objects. Objects facilitate the organization, manipulation, and interaction of data within the software system, contributing to principles such as encapsulation, inheritance, visualization, and polymorphism.

The information model that is generated within the framework of the present invention can comprise at least one software component. The information model can also be implemented or embodied as software, for example as one or more software components.

As mentioned, there may be a number of assets of the class "pump", each given by a pump of an industrial system or plant. All assets of the type "pump", preferably all pumps of an industrial system/plant, can be included in an assets collection "pump". Each row of such an assets collection regards/represents one of the pumps. For each row of the assets collection and therefore each pump, there will be a matching object. The matching objects are called asset objects. In the example mentioned above, with the two subclasses "Dynamic" and "PositiveDisplacement" being subclasses of subclass "Pump", an assets collection "Dynamics" regarding all dynamic pumps and comprising one row for each of the dynamic pumps, and an assets collection "PositiveDisplacements" regarding all positive displacement pumps and comprising one row for each of the positive displacement pumps, would or will automatically be created.

Preferably, each assets collection corresponds to a category folder in the hierarchy, in particular the hierarchy of the asset objects. Each category folder may have a group of objects of that class which corresponds to all collection records in the respective assets collection. The hierarchy preferably contains folder (objects) that act as grouping containers for objects (including other folders) much like a file system has directories/folders and files.

The tabular approach, in other words the assets collections provided according to the present invention, for example is particularly useful when looking from a higher hierarchy level in the plant, such as sites units or areas. Looking at a list of assets of a specific site with summarized information and color-coding capabilities allow users to quickly identify bad actors. Once a bad actor is identified then users can drill down to the asset detail level. This time, users are looking at the object instance, namely the matching asset object, and can easily obtain more detail information on a specific asset which can be helpful for analysis, decision support, or for troubleshooting purposes.

The present invention in other words removes the distinction between objects and tabular/relational data. The present invention allows digital entities representing and/or comprising asset data to be treated as both objects and tabular/relational data from a single unified source thus eliminating the complexity of correlating such data to object analogs. According to the invention, tools, visualization, reporting, etc. can operate on and read from the digital entities representing and/or comprising the asset data in an implicitly consistent and coherent manner. Due to the concept of duality, the present invention combines the advantages of both worlds/approaches.

The assets model preferably is the abstract representation of types, in particular types of assets. It regularly is where asset classes are defined. Preferably it contains only metadata. Point data (single values) may be cached when received from the external data sources and may be centrally stored. Similarly, tabular data (rows of values) are preferably cached and centrally stored.

It should be emphasized that it does not matter in which order the aforementioned steps of the method according to the invention are carried out. In particular, while it is for example possible that the assets collections are created first and only then matching asset objects, it is also possible that the asset objects are created first from the assets model and the assets collections afterwards or that both, the assets collections and asset objects, are created at the same time.

User input may be used for creation of the assets model. For example, information that is or was input by a user, for example via a suitable user interface, may be used for creating of the assets model.

A further preferred embodiment of the method according to the present invention is characterized in that relationships among assets are automatically updated both in the assets collections as well as in the asset object hierarchy when new updates arrive from the data sources. The updates preferably are based on modeling and information across the data sources.

Another embodiment is characterized in that security rules are applied to the rows of the assets collections and to the matching asset objects. Expediently, identical security rules are in each case applied to a - or the respective - row of an assets collections and to the matching asset object. Security rules preferably are applied to each row/object.

Furthermore, the rows of the assets collections and the matching asset objects preferably are automatically kept consistent.. This ensures that a change in a row of an assets collection results in a corresponding change in the matching asset object and vice versa. Asset objects and corresponding rows of the assets collections are always consistent then.

According to another preferred embodiment the manner in which the data is read, analyzed, and updated from the back-end data sources at defined intervals ensures that changes to assets in the real world (adding new assets, removing unused assets, updates to existing asset information) effects a change to the tabular/object representations in the system, i.e. effects a change in the assets collections as well as the matching asset objects. If an asset is added, the system preferably detects this and creates the new row in the correct assets collections and instantiates a new object. If removed, the row(s) and the object are deleted.

If updated, changes are made to the row/object to reflect the changes. In other words, the internal representation of the asset is synchronized with the external/real-world information about the asset at some frequency.

According to another preferred embodiment, the assets collections comprise asset views, the asset views specifying how asset data saved in the assets collections and/or how asset data saved in the matching asset objects is to be displayed. Such an asset view for an asset is preferably saved in the row of the (respective) assets collection representing the asset.

Furthermore, it has proven as particularly advantageous, if dynamic data of at least one of the assets is saved in the assets collection or assets collections that comprise a row for the at least one asset. The dynamic data may for example be measurement data originating from at least one of the assets and being detected repeatedly with at least one sensor. Expediently, the dynamic data is regularly updated in synchronous or asynchronous manner.

The assets collection or the assets collections preferably have a column in which the current value of the dynamic data is saved, dynamic value column. The dynamic value column preferably is a JSON-type column. The assets collection or the assets collections may also have a column in which the name of a tag is saved, tag name column, wherein a subscription to the tag with this name delivers the current value of the dynamic data of the at least one asset. In other words, there are two columns, one for the name of the (respective) tag, preferably being a string, and one for a value, preferably a current measurement value, which is obtained via the subscription to this tag. For each row, in other words each asset in an assets collection, a tag name and corresponding (current) value may be saved and displayed in the two fields of these two columns and the row of the asset.

In other words, a technique is provided which allows tabular relations between static asset data and dynamic data coming from tags.

Coming back to the above example of an assets collection for a number of pumps of an industrial system or plant, a rotational velocity of each pump may be measured during the operation of the system or plant, for example in RPM (rotations per minute). In the tag name column the name of a tag for the RPM value, preferably being a string, may then be stored in the respective row for the respective pump and the dynamic value column comprises - in each row - the current RPM value for the respective pump. This RPM-value comes from subscription to the tag for example asynchronously.

In further preferred embodiment, the assets collections each comprise an ID-column for IDs of the assets, the ID-column preferably being an integer type column. Also, there can be a name column for names of the assets, the name column preferably being a string type column. The values for the ID-column and/or the name column of an assets collection expediently come from at least one (backend) data source as a constant.

The data sources from which asset data is collected may for example comprise at least one process/plant historian and/or at least one relational database with asset information and/or at least one lab information management system (LIMS) and/or at least one work order management system and/or at least one planning system, in particular Enterprise Resource Planning system (ERP), and/or at least one web service (REST etc.) and/or at least one application. Application data may for example be data for analytics and/or simulations. The data sources from which asset data is collected, preferably are external data sources, where external is to be understood as external in relation to the generated information model.

If the asset data regard and preferably originate from the assets of an industrial system or plant, the assets may for example be pumps and/or drives and/or valves and/or turbines and/or compressors and/or heat exchangers.

According to another preferred embodiment, asset data is output from the information model, in particular in response to at least one query, preferably user query.

The information model may be used for operating an industrial system or plant.

Accordingly, it is also possible that at least one decision regarding the operation of the industrial system or plant is based on the data output. It may for example be that at least one asset of the industrial system or plant is operated based on the data output.

The method according to the present invention or an information model generated according to the method of the present invention can be used within the framework of a method for operating an industrial system or plant.

An information model generated according to the method of the present invention preferably is an industrial information model, in particular regarding assets of an industrial system or plant.

Subject of the invention also is a computer program comprising instructions which, when the program is executed by at least one computer, cause the at least one computer to carry out the method according to the present invention.

Furthermore, subject of the invention is a computer-readable medium having stored thereon the computer program according to the present invention. The computer-readable medium can be, for example, a CD-ROM or DVD or a USB or flash memory. It should be noted that a computer-readable medium is not to be understood exclusively as a physical medium, but can also be embodied, for example, in the form of a data stream and/or a signal representing a data stream.

Further features and advantages of the present invention will become clear by the following description of an embodiment according to the invention with reference to the enclosed drawing. In the drawing shows:
Figure 1 an assets model, assets collections and an object hierarchy according to an exemplary embodiment of the invention in purely schematic representation,
Figure 2 a partial view of the assets collections "pumps" of figure 1 showing only some columns of the table,
Figure 3 an overview of some of the matching asset objects for assets collection "pump" of figure 1,
Figure 4 an object-oriented view for one of the asset objects matching a row of the assets collection of figure 1, and
Figure 5 a partial view of the assets model of figure 1 as well as some of the columns of the assets collection "pump" of figure 1 comprising, inter alia, a tag name column for RPM-tags and a dynamic value column for RPM-values of the assets collection's pumps in purely schematic representation.

In the figures, the same reference signs are used for identical or corresponding elements or components.

In the following, an exemplary embodiment of the method for generating an information model for the collection and output, in particular display, of asset data originating from multiple data sources according to the present invention is described.

The asset data regards and/or originates from assets of an industrial system or plant. The industrial system or plant, which is not further shown in the figures, can for example be one for manufacturing goods and or for carrying out at least one chemical process or the like. The system's or plant's assets, from which the asset data originates and/or which the asset data regards, can for example be given as one or more pumps and/or drives and/or valves and/or turbines and/or compressors and/or heat exchangers etc.

The data sources from which asset data is collected, preferably are external data sources, being external in relation to the information model being generated. The data sources from which asset data is collected may for example comprise at least one process/plant historian and/or at least one relational database with asset information and/or at least one lab information management system (LIMS) and/or at least one work order management system and/or at least one planning system, in particular Enterprise Resource Planning system (ERP), and/or at least one web service (REST etc.) and/or at least one application. Application data may for example be data for analytics and/or simulations. Accordingly, the asset data may contain different types and formats of data, including relational data, point data, time-series data, and object data.

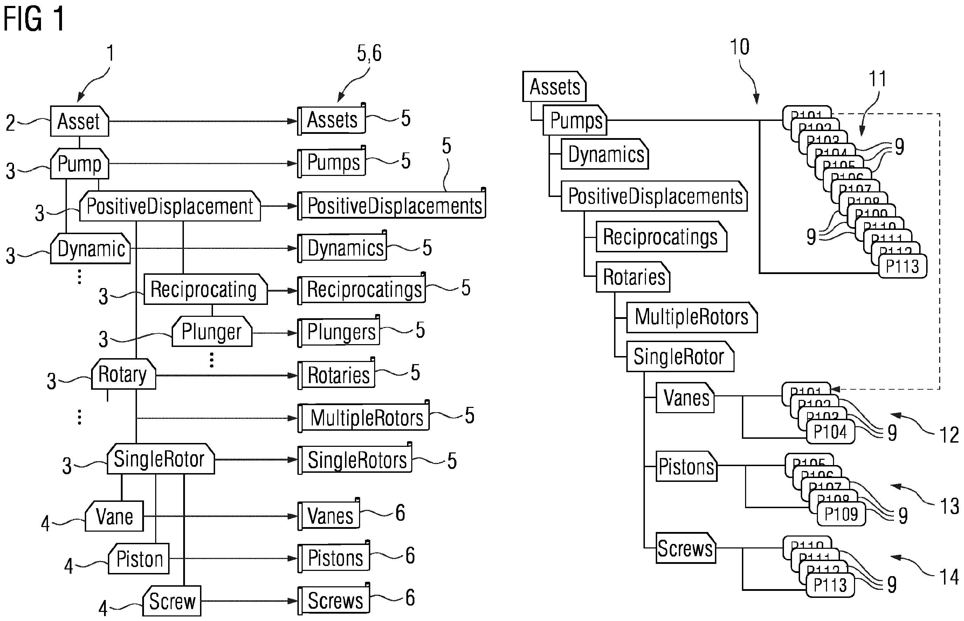

The exemplary embodiment of the method according to the invention comprises creating an assets model 1 being a class system with several classes 2, 3, 4 and relations between classes. The left part of figure 1 shows the created assets model 1 of the present example, with classes 2, 3, 4 in purely schematic representation.

From the classes 2, 3, 4, one class "Asset" 2 is a built-in class defining the assets model 1. Class "Asset" 2 is an internally, immutable class. In addition, there are subclasses 2, 3 of the Asset. From the subclasses 3, 4 some subclasses 2, being called here "Category Asset", have their own subclasses 2, 3, and some classes 3 being called here "Final Asset" have no subclasses.

The first subclass 3, being a direct subclass of class "Asset" 2 represents a specific type of asset, namely all assets being embodied as pumps. In figure 1, only one direct subclass of class "Asset" 2 is exemplarily shown. The direct and further subclasses 3, 4 of subclass "Pump" 3 regard attributes/features of the assets of the type of the direct subclass 3 of class "Asset", here being embodied as pumps, namely if the pumps are positive displacement or dynamic pumps and further attributes/features of these two groups/categories of pumps (rotary or reciprocating etc.).

It is emphasized that the assets model 1 can and usually will comprise more subclasses 3, 4 than the ten subclasses 3, 4 exemplarily shown in the left part of figure 1. In particular, while figure 1 shows only one direct subclass "Pump" of the built-in class "Asset", there will usually be further direct subclasses of built-in class "Asset" 2 since industrial systems or plants in addition to pumps regularly comprise assets of other kind or type, for example drives and/or valves and/or turbines and/or compressors and/or heat exchangers etc..

The class system of the assets model 1 includes inheritance from and composition with other assets.

The method also comprises the step of automatically creating assets collections 5, 6 from the assets model 1, wherein the assets collections 5, 6 are embodied as tables with rows 7 and columns 8 and are configured to receive asset data from the data sources. In schematic figure 1 the assets collections 5, 6 being embodied as tables are only shown schematically as single block elements or flags for sake of clarity. Their automatic creation and synchronization, which will also be further explained below, are schematically indicated in figure 1 by arrows which each connect a class 2, 3, 4 of the assets model 1 with the corresponding, automatically created assets collection 5, 6.

In analogy to subclasses 2 with their own subclasses 2, 3 being called "Category Asset", and subclasses 3 without subclasses being called "Final Asset", assets collections automatically created from or for "Category Asset" subclasses 3 may be called assets category collections 5 and assets collections automatically created from or for "Final Asset" subclasses 4 may be called assets final collections 6.

Each row 7 in each assets collection 5, 6 represents one asset and comprises and/or receives data for the respective asset, the respective assets collection 5, 6 being configured accordingly. In the example shown, one assets collection 5, 6 is automatically created for each class 2, 3, 4 of the assets model 1. The same asset can and often will be found in more than one assets collection 5, 6, in particular be represented by a row 7 in more than one of the assets collections 5, 6.

The method also comprises the step of automatically creating objects 9 for the assets such that the assets are on one hand represented as rows 7 in the tables of the assets collections 5, 6 and on the other hand as a hierarchy 10 of matching asset objects 9. The hierarchy can also be called object or assets hierarchy 10 (see figure 1, right side).

The columns 8 of the respective assets collection 5, 6 are defined by the assets model 1 class's member attributes and rows 7 are inserted based on data read from the back-end data sources that match the asset type. The asset objects 9 are instantiated as defined by the corresponding class and member data of each asset object 9 preferably comes from the corresponding row 7 in the assets collection 5, 6 of the same type.

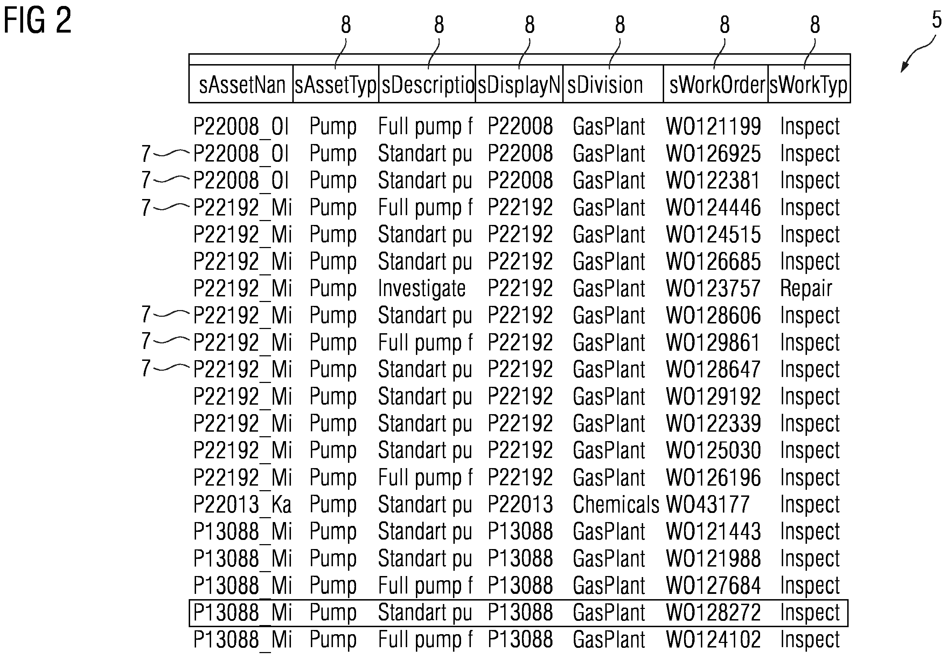

Figure 2 exemplarily shows a partial view of one assets collections 5, 6 of figure 1, namely some of the rows 7 and some of the columns 8 of assets collection "Pumps" 5 of figure 1. From the columns exemplarily shown here, the first, most left column regards or comprises a name of the respective asset, here pump. There also is a column for descriptions of each asset (full pump, standard pump, ...), one specifying the plant, here a GasPlant, a column for work orders for the respective pump and further columns. In purely exemplary, schematic figure 1 the entries in the columns in some cases are only shown partially for reasons of clarity.

Each assets collection 5, 6 corresponds to a category folder in the hierarchy 10.

Each folder also has a group of asset objects 9 of that class which corresponds to all collection records in the respective assets collection 5, 6. The hierarchy 10 preferably contains folders (objects) that act as grouping containers for objects (including other folders) much like a file system has directories/folders and files.

The assets model 1 is the abstract representation of types. Expediently, it is where asset classes are defined. It contains only metadata. Point data (single values) are cached when received from the external data sources and centrally stored. Similarly, tabular data (rows of values) are cached and centrally stored.

The relationships among assets are automatically updated both in the assets collections 5, 6 as well as in the asset object hierarchy 10 when new updates arrive from the data sources, preferably, wherein the updates are based on modeling and information across the data sources.

Also, security rules are applied to the rows 7 of the assets collections 5, 6 and to the matching asset objects 9, preferably, wherein identical security rules are in each case applied to a row 7 of an assets collections 5, 6 and to the matching asset object 9.

The rows 7 of the assets collections 5, 6 and the matching asset objects 9 are automatically kept consistent. Accordingly, a change in a row 7 of an assets collection 5, 6 results in a corresponding change in the matching asset object 9 and vice versa, so that there is always consistency.

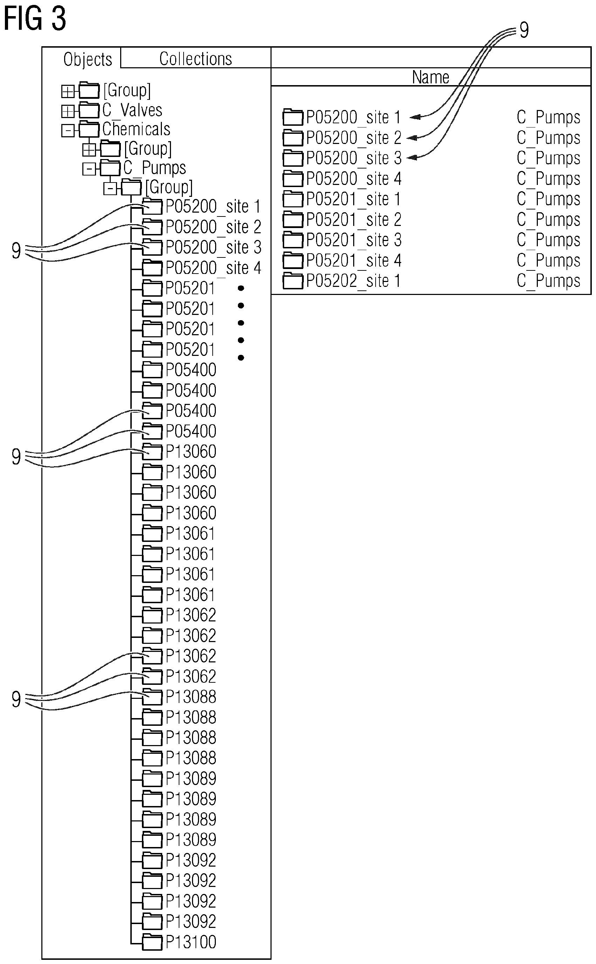

Figure 3 exemplarily shows a number of created asset objects 9. Here, asset objects from different sites, i.e. industrial systems or plants located at different places, are shown.

In the right side of figure 1, in addition to the assets or object hierarchy 10, four groups of asset objects 9 of four classes 3, 4 are exemplarily shown. In detail, a group 11 of asset objects 9 of class "Pump" 3, a group 12 of asset objects 9 of class "Vane" 4, a group 13 of asset objects 9 of class "Pistons" 4 and a group 14 of asset objects 9 of class "Screws" 4. Figure 1 also shows - purely exemplary - object addresses, for example:
::Assets.Pumps.P101 for the first Pump with name "P101" of class "Pump", and
::Assets.Pump.PositiveDisplacement.Rotaries.SingleRotors.Vanes.P101 for the same pump "P101" in group 12 of class "Vanes".

As can be seen, each pump is part of different classes and thereby different groups 11-14. In group 11 of class "Pumps" all Pumps P101-P113 are contained. In the shown embodiment, these pumps all are positive displacement pumps of rotary type, having a single motor. These pumps are distributed over the three Final asset subclasses "Vane", "Piston" and "Screw", namely over groups 12-14, as can be seen in figure 1, right side.

An arrow with dashed line connecting Pump P101 in group 11 and pump P101 in group 12 schematically indicates that the addresses point to the same final object casted to a different subclass.

The assets collections 5, 6 preferably comprise asset views (not shown), the asset views specifying how asset data saved in the assets collections 5, 6 and/or the asset objects 9 is to be displayed, for example to a user. Such an asset view for an asset is preferably saved in the row of the (respective) assets collection representing the asset.

A load default view request will return a default view of the given class, the respective assets collection 5, 6 corresponds to or originates from.

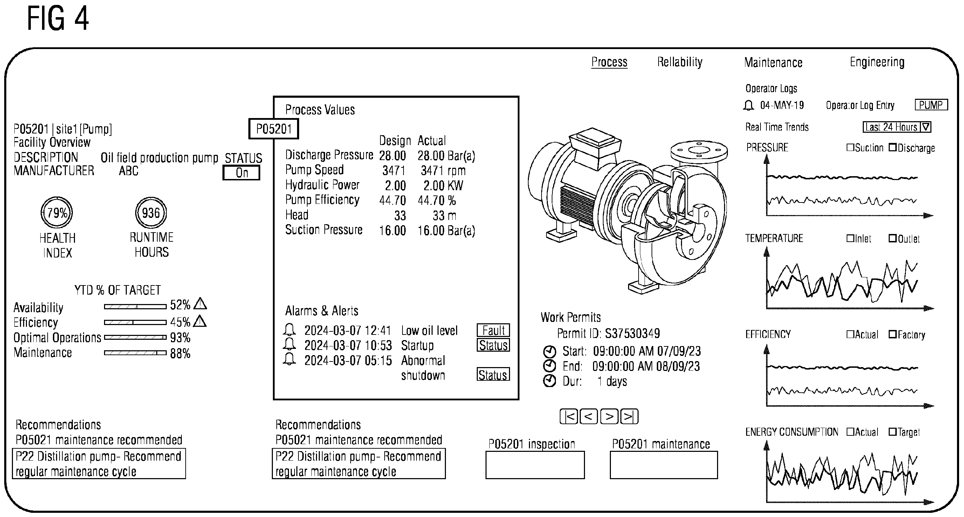

Figure 4 exemplarily shows the display of an asset object 9, namely for pump P05201 (compare with figure 3) from site 1 according to a view.

For example, the tabular approach, in other words the assets collections 5, 6 may be particularly useful when looking from a higher hierarchy level in the system or plant, such as sites, units or areas. Looking at a list of assets, namely the corresponding rows 7 in the respective collection 5, 6 (compare figure 2) for example of a specific site with summarized information and color-coding capabilities allow users to quickly identify bad actors. Once a bad actor is identified, then users can rely on the object instance(s). The view of the object instance for example according to figure 4 makes it possible to easily obtain more detail information on a specific asset, here the pump P05201 from site 1, which can be helpful for analysis, decision support, or for troubleshooting purposes.

Furthermore, it has proven as particularly advantageous, if dynamic data of assets is saved in the corresponding assets collections 5, 6. The dynamic data may for example be measurement data originating from at least one of the assets and being detected repeatedly with at least one sensor. Expediently, the dynamic data is regularly updated in synchronous or asynchronous manner.

Coming back to the above example of an assets collection 5, 6 for a number of pumps of an industrial system or plant, a rotational velocity of each pump may be measured during the operation of the system or plant, in particular in RPM (rotations per minute) and included in the assets collections 5, 6 of the pumps.

The assets collections 5, 6 regarding the pumps (again, compare the left side of figure 1) can have a column then, in which the current value of the dynamic data is saved, namely the current RPM value of the respective pump.

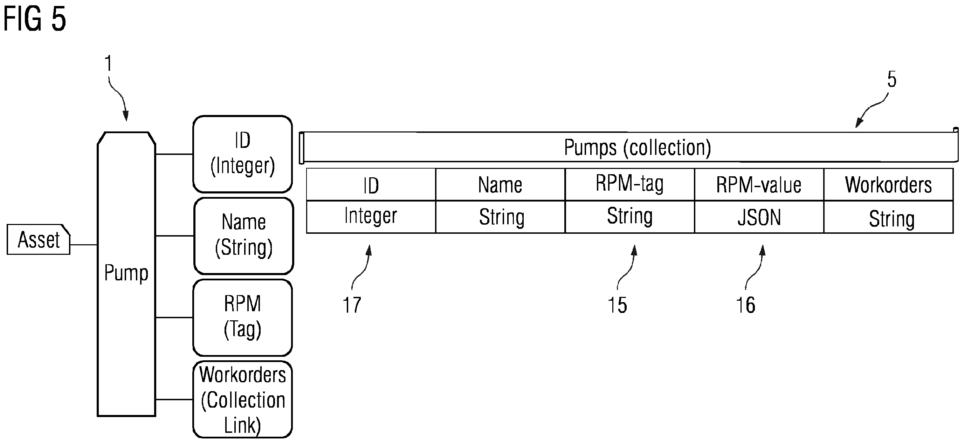

Figure 5 shows on the left side a partial view of the assets model 1 of figure 1 as well as some of the columns of the assets collection "pump" 5 of figure 1 comprising, inter alia, a tag name column 15 for RPM-tags and a dynamic value column 16 for RPM-values of the assets collection's pumps in purely schematic representation. It is noted that figure 5 and figure 2 show different columns 8 of asset collection "Pump" 5. This with the exception of the column 8 with the name of the respective asset and the column for workorders, which can be seen both in figure 2 and figure 5.

The dynamic value column 16 preferably is a JSON-type column. In the rows 7 of the tag name column 15 the name of a tag is saved for the respective asset, here pump. A subscription to the tag with this name delivers the current value of the dynamic data, here RPM-value, of the respective pump. In other words, there are two columns, one for the name of the (respective) tag, preferably being a string type column, and one for a value, preferably a current measurement value, which is obtained via the subscription to this tag. For each row, in other words each asset in an assets collection, a tag name and corresponding (current) value may be saved and displayed in the two fields of these two columns and the row of the asset. In other words, a technique is provided which allows tabular relations between static asset data and dynamic data coming from tags. The values of or for the tag name column 15 expediently come to the assets collection 5, 6 from the backend (data sources). The dynamic data is updated in the table 5, 6 in the field in a row 7 when updated from the back-end data source.

It is noted that while the tag name column 15 and dynamic value column 16 are logically shown as part of assets collection "Pump" 5, they may or would be implementation specific and might e.g., reside in a tag value collection linked by referential key in a specific implementation.

Besides the tag name column 15 and dynamic value column 16 and the columns 8 also recognizable in figure 2, the assets collection 5 may comprise an ID-column 17, which preferably is an integer type column and comprises IDs of the respective asset, here pump. The respective value expediently comes to the collection from the backend (data sources) as a constant. The same expediently applies to the name column.

The column with the title "workorders" preferably is a string type column and not linked to a data source. The value of this column expediently defines the filtering relationship between the asset and the associated workorders collection narrowing the content to only those workorders associated with the specific pump.

The elements shown in figure 1 including the assets model 1, assets collections 5, 6, asset objects 9 and hierarchy 10 are part of the information model being created as described above.

After generation of the information model as described above, Asset data may be output in response to user queries, for example a view as shown in figure 4. It is of course also possible that at least one decision regarding the operation of the industrial system or plant is based on data output from the information model, preferably, wherein at least one asset of the industrial system or plant is operated based on data output from the information model.

Including dynamic data, for example the current RPM-values of the pumps in the assets collections 5, 6 in particular makes it possible to formulate queries like "show me all pumps currently operating with less than 300 RPM" and to obtain a corresponding output with all pumps fulfilling this criterion.

A computer program may be used comprising instructions which, when the program is executed by at least one computer, cause the at least one computer to carry out the method as described above. Such a computer program is an exemplary embodiment of a computer program according to the present invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

Independent of the grammatical term usage, individuals with male, female or other gender identities are included within the term.

## Claims

1. Method, in particular computer implemented method, for generating an information model for the collection and output, in particular display, of asset data originating from multiple data sources, the asset data regarding and/or originating from assets, in particular assets of an industrial system or plant, the method comprising:
- creating an assets model (1) being a class system with several classes (2, 3, 4) and relations between classes (2, 3, 4), preferably, wherein one class (2) defines the assets model (1), main class, and/or several classes (3, 4) represent different types of assets, subclasses, and/or wherein the class system includes inheritance from and composition with other assets,
- automatically creating assets collections (5, 6) from the assets model (1), wherein the assets collections (5, 6) are embodied as tables and are configured to receive asset data from the data sources, wherein each row (7) in an assets collection (5, 6) represents one asset and comprises and/or receives data for the respective asset, and wherein at least one, in particular exactly one, assets collection (5, 6) is automatically created for each class (2, 3, 4) of the assets model (1), and
- automatically creating objects (9) for the assets, wherein the assets are on one hand represented as rows (7) in the assets collections (5, 6) and on the other hand as a hierarchy of matching asset objects (9).

2. Method according to claim 1, **characterized in that** relationships among assets are automatically updated both in the assets collections (5, 6) as well as in the asset object hierarchy (10) when new updates arrive from the data sources, preferably, wherein the updates are based on modeling and information across the data sources.

3. Method according to claim 1 or claim 2, **characterized in that** security rules are applied to the rows (7) of the assets collections (5, 6) and to the matching asset objects (9), preferably, wherein identical security rules are in each case applied to a row (7) of an assets collections (5, 6) and to the matching asset object (9).

4. Method according to one of the foregoing claims, **characterized in that** the rows (7) of the assets collections (5, 6) and the matching asset objects (9) are automatically kept consistent so that a change in a row (7) of an assets collection (5, 6) results in a corresponding change in the matching asset object (9) and vice versa.

5. Method according to one of the foregoing claims, **characterized in that** the assets collections (5, 6) comprise asset views, the asset views specifying how asset data saved in the assets collections (5, 6) is to be displayed, preferably, wherein an asset view for an asset is saved in the row (7) of the assets collection (5, 6) representing the asset.

6. Method according to one of the foregoing claims, **characterized in that** the hierarchy of the assets model (1) is defined by the classes (2, 3, 4) and their relations.

7. Method according to one of the foregoing claims, **characterized in that** dynamic data of at least one of the assets, in particular measurement data originating from at least one of the assets and being detected repeatedly with at least one sensor, is saved in the assets collection (5, 6) or assets collections (5, 6) that comprise a row (7) for the at least one asset, preferably, wherein the dynamic data is regularly updated in synchronous or asynchronous manner.

8. Method according to claim 7, **characterized in that** the assets collection (5, 6) or the assets collections (5, 6) have a column in which the current value of the dynamic data is saved, dynamic value column (16), and preferably a column in which the name of a tag is saved, tag name column (15), wherein a subscription to the tag with this name delivers the current value of the dynamic data of the at least one asset.

9. Method according to one of the foregoing claims, **characterized in that** the data sources from which asset data is collected comprise at least one process historian and/or at least one relational database with asset information and/or at least one lab information management system and/or at least one work order management system and/or at least one planning system, in particular Enterprise Ressource Planning system, and/or at least one web service and/or at least one application.

10. Method according to one of the foregoing claims, **characterized in that** the asset data regard and preferably originate from the assets of an industrial system or plant, the assets being pumps and/or drives and/or valves and/or turbines and/or compressors and/or heat exchangers.

11. Method according to one of the foregoing claims, **characterized in that** asset data is output, in particular in response to at least one query, preferably user query.

12. Method according to claim 11, **characterized in that** at least one decision regarding the operation of the industrial system or plant is based on the data output, preferably, wherein at least one asset of the industrial system or plant is operated based on the data output.

13. A computer program comprising instructions which, when the program is executed by at least one computer, cause the at least one computer to carry out the method of any of the foregoing claims.

14. A computer-readable medium having stored thereon the computer program according to claim 13.
